## Europäisches Patentamt

## European Patent Office

## Office européen des brevets

(11) Veröffentlichungsnummer: **0 039 000**
**B1**

(12) # EUROPÄISCHE PATENTSCHRIFT

(45) Veröffentlichungstag der Patentschrift:
27.04.83

(51) Int. Cl.³: **G 05 D 16/20,** F 16 K 31/40 //
F23N5/00

(21) Anmeldenummer: 81102899.2

(22) Anmeldetag: 15.04.81

(54) **Gasdruckregler.**

(30) Priorität: 25.04.80 DE 3015980

(43) Veröffentlichungstag der Anmeldung:
04.11.81 Patentblatt 81/44

(45) Bekanntmachung des Hinweises auf die Patenterteilung:
27.04.83 Patentblatt 83/17

(84) Benannte Vertragsstaaten:
DE FR GB IT NL

(56) Entgegenhaltungen:
EP-A-0 006 770
DE-B-1 206 239
GB-A-1 228 782
US-A-2 764 996

(73) Patentinhaber: HONEYWELL B.V., Rijswijkstraat 175,
NL-1062 EV Amsterdam (NL)

(72) Erfinder: Berkhof, Hendrikus, Stuwwal 7, Emmen (NL)

(74) Vertreter: Rentzsch, Heinz et al, Honeywell Europe S.A.
Holding KG Patent- und Lizenzabteilung
Kaiserleistrasse 55, D-6050 Offenbach am Main (DE)

Druckregler

Die Erfindung betrifft einen Druckregler gemäss Gattungsbegriff des Anspruchs 1. Bei einem aus der DE-B 1 273 457 bekannten Gasdruckregler dieser Art liegt der Anker des Elektromagneten unmittelbar am Membranteller des Druckreglers an und stützt sich auf der gegenüberliegenden Seite über eine Druckfeder an einem verstellbaren Anschlag ab. Auf die Membran wirkt ferner in der gleichen Richtung wie die genannte Druckfeder eine zweite Schraubenfeder ein, deren Abstützpunkt über eine Druckplatte und eine Einstellschraube ebenfalls im Gehäuse verstellbar ist. Auf diese Weise lässt sich die auf die Membran einwirkende Mindestkraft vorgeben. Zur Einstellung der Höchstkraft dient der erwähnte Einstellanschlag für die auf den Anker einwirkende Druckfeder. Es handelt sich um einen direkt wirkenden Druckregler, d.h. beim Ansteigen des Auslassdruckes wird das Regelventil durch den auf die Membran einwirkenden Auslassdruck in Richtung Schliessstellung bewegt, um auf diese Weise den Gasstrom zu drosseln.

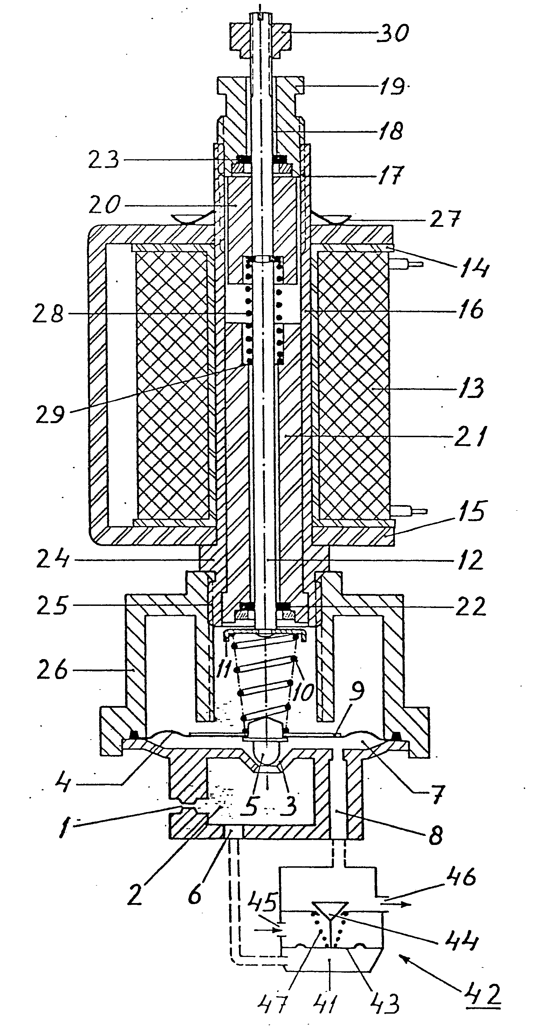

Aufgabe der Erfindung ist es, einen möglichst einfach aufgebauten und einfach einstellbaren Druckregler zu schaffen, der sich insbesondere als Servodruckregler zur Steuerung des Hauptgasventils in einem Gasregelgerät eignet. Gasregelventile mit Servosystem sind beispielsweise in der Firmendruckschrift D3H-29 HONEYWELL «Kompakt-Ventile V4600/V8600» dargestellt und beschrieben. Der mittels einer Membran verstellbare Schliesskörper des Hauptgasventils ist dabei durch eine Druckfeder in Schliessrichtung vorgespannt, während der auf die Membran einwirkende Steuerdruck das Ventil gegen die Kraft der Schliessfeder zu öffnen sucht. Wenn hier der Auslassdruck des Hauptventils absinkt, muss der Steuerdruck zunehmen, um das Hauptventil weiter zu öffnen. Bei einem insbesondere der Erzeugung eines solchen Steuerdrucks dienenden Druckregler wird die gestellte Aufgabe gelöst durch die im Anspruch 1 gekennzeichnete Erfindung. Sie hat bei Anwendung des Druckreglers in einem servogesteuerten Gasregelgerät den Vorteil, dass sich für die Steuerung des Ausgangsdruckes in Abhängigkeit von der an den Erregermagneten gelegten, beispielsweise temperaturabhängigen Spannung eine nahezu gleichprozentige Kennlinie ergibt. Dies führt zu guten Regeleigenschaften, beispielsweise einer Heizungsanlage, auch bei geringem Gasdurchsatz. Vorteilhafte Ausgestaltungen der Erfindung ergeben sich aus den Unteransprüchen. Sie wird nachfolgend anhand eines in der Zeichnung wiedergegebenen Ausführungsbeispiels erläutert.

Der Gasdruck vom Einlass eines nicht dargestellten Gasregelgerätes wird über eine Drossel 1 dem Raum 2 unterhalb des Ventilsitzes 3 zugeführt, der mit einem von einer Membran 4 getragenen Schliesskörper 5 zusammenarbeitet. Der Raum 2 ist über einen Steuerdruckkanal 6 an die Steuerkammer 41 eines nur schematisch dargestellten Hauptgasventils 42 angeschlossen. Seine Membran 43 steuert den Schliesskörper 44 im Durchlass zwischen Einlass 45 und Auslass 46. Die Kammer 7 zwischen Ventilsitz 3 und Membran 4 ist über einen Kanal 8 an die Auslasseite 46 des Hauptgasventils 42 angeschlossen. Am Membranteller 9 der Membran 4 stützt sich eine Druckfeder 10 ab, welche auf der anderen Seite an einem bügel- oder topfförmigen Gegenlager 11 anliegt. Dieses Gegenlager wird von einer Stange 12 getragen, die den zylindrischen Innenraum der Erregerspule 13 des Elektromagneten durchsetzt. Die Spule 13 ist auf einen Wickelkörper 14 aufgewickelt, der von einem magnetisch leitfähigen Gehäuse 15 umgeben ist. Durch den Spuleninnenraum ragt ein dünnwandiges Rohr 16, beispielsweise ein Messingrohr, hindurch, welches an seinem oberen Ende mit einem Gewinde 17 versehen ist. In dieses ist eine mit einem Durchgangsloch 18 versehene Stellschraube 19 eingeschraubt. Mit der Stange 12 fest verbunden ist der Anker 20 des Elektromagneten. In den der Membran 4 zugewandten Teil des Spulenkörpers 14 bzw. des Rohres 16 ist ein fester Magnetkern 21 eingesetzt, beispielsweise eingepresst, welcher die Stange 12 berührungsfrei umgibt. Lediglich im unteren Teil dient ein in den Magnetkern 21 eingesetzter und durch eine Metallscheibe gehaltener Kunststoffring 22 als Stangenführung. Auf der der Membran abgewandten Seite wird die Stange 12 durch einen in die Stellschraube 19 eingesetzten Kunststoffring 23 geführt.

Das Rohr 16 weist einen Befestigungsansatz 24 auf, an dem sich einerseits das Gehäuse 15 des Elektromagneten abstützt und der andererseits in ein Gewindeloch 25 des Membrangehäusedekkels 26 eingeschraubt ist. Auf diese Weise erfolgt die Verbindung von Elektromagnet und Druckreglergehäuse. Eine ringförmige Sperrfeder 27 drückt das Gehäuse 15 gegen die Gehäusedeckeloberseite.

Zwischen dem festen Magnetkern 21 und dem Anker 20 des Elektromagneten ist eine Druckfeder 28 eingespannt, welche einerseits eine Gewichtskompensation des Anker- und Stangengewichtes bewirkt und andererseits dafür sorgt, dass auch bei kleinen Luftspalten zwischen Anker 20 und festem Magnetkern 21 noch eine gute Regelmöglichkeit gegeben ist und der Anker 20 nicht plötzlich gegen den festen Magnetkern 21 schlägt. Die Schraubenfeder 28 stützt sich in einem zurückgesetzten Absatz 29 des festen Magnetkerns 21 ab und umgibt die Stange 12.

Auf das äussere Ende der Stange 12 ist eine Einstellmutter 30 aufgeschraubt, welche die Verschiebung der Stange 12 in Richtung auf die Membran 4 begrenzt.

Geht man zunächst von einem stromlosen Elektromagneten 13 aus, so stützt sich unter der Kraft der Feder 10 die Stange 12 über den Anker 20 an der Einstellschraube 19 gestellfest ab, so dass der Bügel 11 ein ortsfestes Widerlager für die Feder 10 bildet. Der Membrandruckregler arbeitet in herkömmlicher Weise. Nimmt der über den Kanal 8 anstehende Auslassdruck des Gasregelgerätes zu, so hebt dieser den Schliesskörper 5 gegen die Kraft der Feder 10 weiter vom Sitz 3 ab, so dass ein Teil des über die Drossel 1 zugeführten Einlassdruckes aus der Kammer 2 zum Auslass 8 hin abgeblasen wird und der Druck in der Steuerleitung 6 sinkt. Damit wird, wie eingangs erwähnt, das schematisch dargestellte Hauptventil 42 durch seine Schliessfeder 47 in Richtung auf einen geringeren Gasdurchsatz verstellt. Bei sinkendem Auslassdruck hingegen, nimmt der Steuerdruck in der Kammer 2 zu und das Hauptgasventil 42 wird weiter geöffnet.

Mit der Stellschraube 19 lässt sich der minimale Steuerdruck und damit der Mindestgasdurchsatz durch das Hauptventil 42 einstellen. Die Einstellmutter 30 hingegen dient der Vorgabe des maximalen Steuerdrucks und damit des maximalen Gasdurchsatzes durch das Hauptventil 42. Wird die Stellschraube 19 tiefer in das Gewinde 17 hineingeschraubt, so erhält die Feder 10 eine höhere Vorspannung und das Abblasventil 5 öffnet erst bei einem höheren Auslassdruck des Gasregelgerätes. Verstellt man die Einstellschraube 30 in Richtung auf die Membran 4, so wird der maximale Auslassdruck verringert. Der Hub der Stange 12 wird also einerseits durch die Einstellmutter 30 und auf der anderen Seite durch die dem Anker 20 zugewandte Stirnseite der Einstellschraube 19 begrenzt.

Fliesst Strom durch die Erregerspule 13, so wird der Anker 20 mit der Stange 12 in Richtung auf die Membran 4 verschoben und damit der Feder 10 eine höhere Vorspannung gegeben. Dies bedeutet, dass das Abblasventil 5 erst bei einem höheren Ausgangsdruck im Kanal 8 öffnet, der Steuerdruck in der Kammer 2 also zunimmt und das Hauptventil 42 weiter geöffnet wird. Mit zunehmendem Stromfluss durch die Spule 13 nimmt also der Gasdurchsatz zu. Geht man davon aus, dass der Strom von der Temperatur in einem über das Gasregelgerät zu beheizenden Raum abhängt, so muss dieser Strom mit sinkender Temperatur zunehmen. Dies lässt sich durch eine Messschaltung mit temperaturabhängigen Widerständen, beispielsweise NTC-Widerständen, leicht erreichen.

In Abhängigkeit von der gemessenen Temperatur und damit von dem die Spule 13 durchfliessenden Strom wird somit der Arbeitspunkt des Druckreglers verstellt, weil auf diese Weise der durch den Bügel 11 gegebene feste Abstützpunkt der Feder 10 eine der Temperatur entsprechende Lage einnimmt. Der Auslassdruck des Gasregelgerätes wird somit vom Druckregler auf einen von der Temperatur abhängigen Wert geregelt, wobei sich, wie Versuche ergeben haben, eine nahezu gleichprozentige Kennlinie ergibt. Dies bedeutet, dass auch bei geringen Durchsatzmengen der Regler seine Regelfähigkeit beibehält und genau arbeitet.

**Patentansprüche**

1. Aus einem Membrandruckregler und einem aufgesetzten Elektromagnetantrieb bestehender steuerbarer Druckregler mit je einem Einstellmittel für den maximalen und den minimalen Ausgangsdruck, gekennzeichnet durch folgende Merkmale:

a) eine die Membran (4) des Druckreglers in Schliessrichtung des Druckregelventils (3, 5) beaufschlagende Druckfeder (10) stützt sich an einer verstellbaren Stange (12) ab;

b) die Stange (12) ragt durch den hohlzylindrischen Innenraum der Erregerspule (13) des Elektromagneten hindurch und trägt den beweglichen Anker (20);

c) in einen rohrförmigen Ansatz (16) des Spulenträgers (14) ist auf der der Membran (4) abgewandten Seite eine von der Stange (12) durchsetzte Hohlschraube (19) eingeschraubt, deren Stirnfläche als verstellbarer Ankeranschlag dient;

d) auf das freie Ende der Stange (12) ist eine mit einem gestellfesten Anschlag zusammenwirkende, die Verschiebung der Stange in Richtung Membran (4) begrenzende Stellmutter (30) aufgeschraubt.

2. Druckregler nach Anspruch 1, dadurch gekennzeichnet, dass der gestellfeste Anschlag für die Stellmutter (30) durch die dem Anker (20) abgewandte Stirnfläche der Stellschraube (19) gebildet ist.

3. Druckregler nach Anspruch 1 oder 2, dadurch gekennzeichnet, dass in den der Membran (4) zugewandten Teil des Spuleninnenraums ein hohlzylindrischer, von der Stange (12) durchsetzter Magnetkern (21) fest eingesetzt ist.

4. Druckregler nach Anspruch 3, dadurch gekennzeichnet, dass zwischen dem festen Magnetkern (21) und dem mit der Stange (12) verbundenen Anker (20) eine die Stange umgebende Druckfeder (28) eingespannt ist.

5. Druckregler nach Anspruch 4, dadurch gekennzeichnet, dass sich die Druckfeder (28) an einem von der Stirnfläche des Magnetkerns (21) und/oder des Ankers (20) zurückgesetzten umlaufenden Absatz (29) abstützt.

6. Druckregler nach einem der Ansprüche 1 bis 5, dadurch gekennzeichnet, dass das Gehäuse (15) des Elektromagneten (13) von einem seinen Innenraum durchsetzenden Rohr (16) getragen ist, in dessen eines Ende (17) die Hohlschraube (19) eingeschraubt ist und an dessen anderem Ende ein Befestigungsansatz (24) die Verbindung mit dem Membrangehäuse (26) herstellt.

7. Druckregler nach Anspruch 6, dadurch gekennzeichnet, dass das Rohr (16) mit einem Gewindeansatz (25) in den Membrangehäusedeckel (26) eingeschraubt ist.

8. Druckregler nach Anspruch 6 oder 7, dadurch gekennzeichnet, dass der Magnetkern (21) in das Rohr (16) eingepresst ist.

9. Druckregler nach einem der Ansprüche 4 bis 8, dadurch gekennzeichnet, dass die Stange (12) einerseits in der Stellschraube (19, 23) und andererseits im Magnetkern (21, 22) oder im Befestigungsansatz (24) des Rohres (16) geführt und der Anker (20) berührungsfrei im Innenraum des Spulenträgers (14) bzw. Rohres (16) verschiebbar ist.

## Claims

1. Controlable pressure regulator consisting of a diaphragm pressure regulator and a solenoid operator fixed to it and including adjusting means for the maximum and minimum outlet pressure characterized by the following features:

    a) a compression spring (10) pressing the diaphragm (4) of the pressure regulator in closing direction of the pressure regulating valve (3, 5) abuts against a movable rod (12);

    b) the rod (12) extends through the hollow cylindrical internal space of the energizing coil (13) of the solenoid and carries a movable armature (20);

    c) in a tubelike extension (16) of the coil form (14) a hollow screw (29) is screwed in at the side opposite diaphragm (4), with said rod (12) extending through the hollow screw (19) and the front surface of said hollow screw (19) forming an adjustable abutment for said armature (20);

    d) screwed unto the free end of the rod (12) is an adjusting nut (30), cooperating with a stationary stop and limiting the movement of the rod (12) in the direction to the diaphragm (4).

2. Pressure regulator according to claim 1, characterized in that the stationary stop for the adjusting nut (30) is formed by the front surface of the adjusting screw (19) which looks opposite to the armature (20).

3. Pressure regulator according to claim 1 or 2, characterized in that a hollow cylindrical magnetic core (21) is fixed in the internal space of the coil facing diaphragm (4), and the rod (12) extends through that core.

4. Pressure regulator according to claim 3, characterized in that a compression spring (28) surrounds the rod (12) and is biased between the stationary magnetic core (21) and the armature (20) which is connected to said rod.

5. Pressure regulator according to claim 4, characterized in that the compression spring (28) abuts against a collar (29) which is recessed with respect to the front surface of the magnetic core (21) and/or of the armature (20).

6. Pressure regulator according to one of claims 1 to 5, characterized in that the housing (15) of the solenoid (13) is carried by a tube (16) extending through said housing, that in one end (17) of the tube (16) the hollow screw (19) is inserted and that at the other end a fixture projection (24) provides the mechanical connection to the diaphragm housing (26).

7. Pressure regulator according to claim 6, characterized in that the tube (16) is screwed in the cover (26) of the diaphragm housing by means of a threaded projection (25).

8. Pressure regulator according to claim 6 or 7, characterized in that the magnetic core (21) is pressed into the tube (16).

9. Pressure regulator according to one of claims 4 to 8, characterized in that the rod (12) at one side is guided in the adjusting screw (19, 23) and at the other side is guided in the magnetic core (21, 22) or in the fixture projection (24) of the tube (16), and that the armature (20) is movable touchfree within the internal space of the coil form (14) or the tube (16) respectively.

## Revendications

1. Régulateur de pression pouvant être commandé, se composant d'un régulateur de pression à membrane sur lequel est placé un entraînement électromagnétique et pourvu de moyens respectifs de réglage de la pression maximale et de la pression minimale de sortie, caractérisé par les éléments suivants:

    a) un ressort de pression (10) sollicitant la membrane (4) du régulateur de pression dans la direction de fermeture de la valve de régulation de pression (3, 5) s'appuie contre une tige mobile (12).

    b) la tige (12) traverse le volume intérieur cylindrique creux de la bobine d'excitation (13) de l'électroaimant et porte l'armature mobile (20);

    c) dans un appendice de forme tubulaire (16) du support de bobine (14) est vissée, sur la côté opposé à la membrane (4), une vis creuse (19) traversée par la tige (12) et dont la surface frontale sert de butée d'armature déplaçable,

    d) sur l'extrémité libre de la tige (12) est vissé un écrou de réglage (20) coopérant avec une butée solidaire du châssis et limitant le mouvement de la tige en direction de la membrane (4).

2. Régulateur de pression selon la revendication 1, caractérisé en ce que la butée, solidaire du châssis, pour l'écrou de réglage 30 est constituée par la surface frontale, opposée à l'armature (20), de la vis de réglage (19).

3. Régulateur de pression selon l'une des revendications 1 ou 2, caractérisé en ce qu'un noyau magnétique (21) cylindrique creux, traversé par la tige (12), est fixé dans la partie du volume intérieur de bobine qui est opposée à la membrane (4).

4. Régulateur de pression selon la revendication 3, caractérisé en ce qu'un ressort de pression (28) entourant la tige est comprimé entre le noyau magnétique fixe (21) et l'armature (20) reliée à la tige (12).

5. Régulateur de pression selon la revendication 4, caractérisé en ce que le ressort de pression (28) s'appuie contre un épaulement intérieur (29) placé en retrait par rapport à la surface frontale du noyau magnétique (21) et/ou l'armature (20).

6. Régulateur de pression selon l'une des revendications 1 à 5, caractérisé en ce que le carter (15) de l'électro-aimant (13) est porté par un tube (16) traversant son volume intérieur et dans une extrémité (17) duquel est vissée la vis creuse (19) tandis qu'à son autre extrémité une saillie de fixation (24) établit la liaison avec le carter de membrane (26).

7. Régulateur de pression selon la revendication 6, caractérisé en ce que le tube (16) pourvu d'un appendice fileté (25) est vissé dans le couvercle (26) du carter de membrane.

8. Régulateur de pression selon l'une des revendications 6 ou 7, caractérisé en ce que le noyau magnétique (21) est emmanché dans le tube (16).

9. Régulateur de pression selon l'une des revendications 4 à 8, caractérisé en ce que la tige (12) est guidée d'un côté dans la vis de réglage (19, 23) et de l'autre côté dans le noyau magnétique (21, 22) ou bien dans l'appendice de fixation (24) du tube (16) et en ce que l'armature (20) est déplaçable par translation sans contact dans le volume intérieur du support de bobine (14) ou du tube (16).